# EUROPÄISCHE PATENTSCHRIFT

(11) **EP 1 501 712 B1**
(45) Veröffentlichungstag und Bekanntmachung des Hinweises auf die Patenterteilung: **08.12.2010**
(21) Anmeldenummer: 03732286.4
(22) Anmeldetag: 22.04.2003
(51) Int. Cl.: B60T 8/36, F16K 31/06

(54) **ELEKTROMAGNETVENTIL, INSBESONDERE FÜR SCHLUPFGEREGELTE KRAFTFAHRZEUGBREMSANLAGEN**
ELECTROMAGNETIC VALVE, ESPECIALLY FOR SLIP REGULATED MOTOR VEHICLE BRAKE SYSTEMS
SOUPAPE ELECTROMAGNETIQUE DESTINEE NOTAMMENT A DES SYSTEMES DE FREINAGE DE VEHICULES AUTOMOBILES A REGULATION DU GLISSEMENT

(30) Priorität: 26.04.2002 DE 10218658; 11.11.2002 DE 10252231
(43) Veröffentlichungstag der Anmeldung: 02.02.2005
(73) Patentinhaber: Continental Teves AG & Co. oHG, 60488 Frankfurt (DE)
(72) Erfinder: VOSS, Christoph, 60386 Frankfurt am Main (DE)
(86) Internationale Anmeldenummer: PCT/EP2003/004169
(87) Internationale Veröffentlichungsnummer: WO 2003/091079

(56) Entgegenhaltungen:
- DE-A- 10 010 734
- US-A- 5 810 330
- US-A- 5 865 213
- US-A1- 2002 069 919

## Beschreibung

Die Erfindung betrifft ein Elektromagnetventil, insbesondere für schlupfgeregelte Kraftfahrzeugbremsanlagen, nach dem Oberbegriff des Patentanspruchs 1.

Aus der DE 100 10 734 A1 ist bereits ein Elektromagnetventil bekannt geworden, dessen zweiter, hülsenförmiger Ventilschließkörper derart im Ventilgehäuse angeordnet ist, dass die auf den hülsenförmigen Ventilschließkörper einwirkenden Federn unmittelbar im Strömungsweg zwischen dem Druckmitteleinlass- und Druckmittelauslasskanal platziert sind. Dies führt zwangsläufig zu einem unerwünschten Strömungswiderstand. Ein weiterer strömungstechnischer Nachteil ergibt sich durch den Zwang zur vertikalen Strömungsumlenkung in den sogenannten Druckausgleichsöffnungen im Ventilschließkörper, so dass nach der horizontalen Zuströmung über die im Ventilgehäuse einlassseitig angeordnete Querbohrung eine rechtwinklige Umlenkung der Strömung zur vertikalen Durchströmung der Druckausgleichsöffnungen im hülsenförmigen Ventilschließkörper erforderlich ist. Danach ist eine entgegengesetzte Umlenkung in Richtung des kugelförmigen Ventilschließkörpers erforderlich. Ein weiterer Nachteil ergibt sich durch die Klemmgefahr des zweiten Ventilschließkörpers, wenn die Ventilhülse nicht in erforderlichen Solltoleranzen gefertigt ist.

Aus US-A-5 810 330 geht ein gattungsgemäßes Elektromagnetventil mit einer außerhalb eines Strömungswegs in einem Ventilgehäuse angeordneten, einen von zwei Ventilschließkörper beaufschlagenden Feder, wozu entfernt vom Strömungsweg ein Anschlag vorgesehen ist, der ein Bestandteil eines die beiden Ventilschließkörper aufnehmenden Magnetankers ist. Der Anschlag bildet somit einen Mitnehmer für den von der Feder beaufschlagten Ventilschließkörper, sodass dieser federbeaufschlagte Ventilschließkörper zwangsweise über den Anschlag mit dem Magnetanker gekoppelt ist und somit dessen Hubbewegung folgt. Der Magnetanker baut entsprechend aufwendig, wobei infolge der Mitnehmerfunktion des Anschlags eine Beeinflussung des Schaltverhaltens eintritt.

Daher ist es die Aufgabe der vorliegenden Erfindung, ein Elektromagnetventil der angegebenen Art mit möglichst einfachen, funktionsgerechten Mitteln kostengünstig und kleinbauend derart zu verbessern, dass die vorgenannten Nachteile nicht auftreten.

Diese Aufgabe wird erfindungsgemäß für das Elektromagnetventil der angegebenen Art durch die kennzeichnenden Merkmale des Patentanspruchs 1 gelöst.

Weitere Merkmale, Vorteile und Anwendungsmöglichkeiten der Erfindung gehen im nachfolgenden aus der Beschreibung zweier Ausführungsbeispiele hervor.

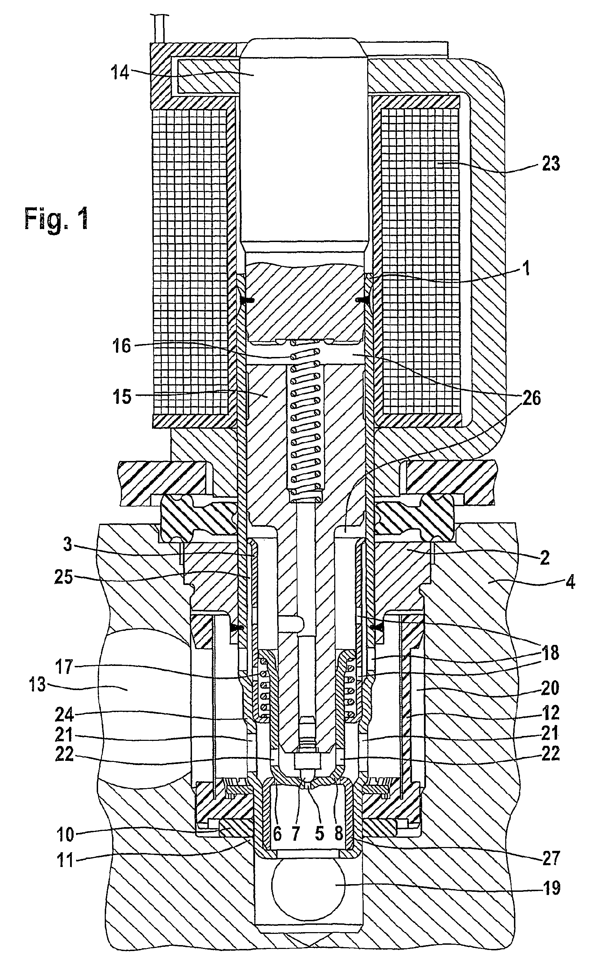

Die Fig. 1 zeigt in einer erheblichen Vergrößerung ein Elektromagnetventil im Längsschnitt mit einem einteiligen, im Tiefziehverfahren dünnwandig ausgeführten Ventilgehäuse 1, das einen separaten, am Außenumfang des Ventilgehäuses aufgesetzten und mittels Laserschweißung befestigten Haltekragen 2 aufnimmt, der durch spanlose Umformung beispielsweise als Kaltschlagteil hergestellt ist. Der im wesentlichen scheibenförmige Haltekragen 2 ist am Außenumfang als Verstemmstempel ausgebildet, so dass dieser mit seiner am Umfang umlaufenden Hinterschneidung mit dem konfektionierten Ventilgehäuse 1 in einer gestuften Aufnahmebohrung eines blockförmigen Ventilträgers 4 eingepresst ist, dessen weiches Material während des Einpressvorgangs zu Befestigungs- und Dichtzwecken in die Hinterschneidung verdrängt wird. Oberhalb des Haltekragens 2 ist der offene Endabschnitt des hülsenförmigen Ventilgehäuses 1 mit einem Stopfen 14 verschlossen, der gleichzeitig die Funktion eines Magnetkerns übernimmt. Auch der Stopfen 14 besteht aus einem kostengünstigen und hinreichend präzise gefertigten Kaltschlagteil, das mit dem Ventilgehäuse 1 am Außenumfang laserverschweißt ist. Unterhalb des Stopfens 14 befindet sich ein Magnetanker 15, der aus einem Rund- oder Mehrkantprofil durch Kaltschlagen bzw. Fließpressen gleichfalls sehr kostengünstig hergestellt ist. Der Magnetanker 15 verschließt unter Wirkung einer Druckfeder 16 in der Ventilgrundstellung mit dem am stößelförmigen Fortsatz des Magnetankers 15 angebrachten ersten Ventilkörper 7 einen ersten, in einem zweiten Ventilschließkörper 8 angeordneten Ventildurchlass 5. Hierzu ist der erste Ventilschließkörper 7 zweckmäßigerweise als Halbkugel am Stößelabschnitt angebracht, der mittels einer Selbstverstemmung in einer Bohrung des Magnetankers 15 befestigt ist, während der zweite Ventilschließkörper 8 im wesentlichen als topfförmiges Tiefziehteil ausgeführt ist, das unter der Wirkung einer Feder 17 in Ventilschließrichtung des ersten Ventilschließkörpers 7 beaufschlagt ist.

Infolge der Wirkung der zwischen dem Stopfen 14 und dem Magnetanker 15 angeordneten Druckfeder 16 verharrt allerdings in der abbildungsgemäßen Ventilgrundstellung der als Ventilverschluss wirksame Boden des topfförmigen zweiten Ventilschließkörpers 8 an einem im unteren Ende des Ventilgehäuses 1 vorgesehenen zweiten Ventildurchlass 6, dessen abhängig vom hydraulischen Differenzdruck freischaltbarer Durchlassquerschnitt erheblich größer ist als der elektromagnetisch freischaltbare Öffnungsquerschnitt am ersten Ventildurchlass 5.

Die Feder 17 stützt sich an einem Rand des als Hülsenkolben ausgeführten zweiten Ventilschließkörpers 8 ab, der von gestanzten Querbohrungen 22 horizontal durchdrungen ist.

Zur Aufnahme und Abdichtung des Ventilgehäuses 1 in der Bohrungsstufe 11 ist das Ventilgehäuse 1 im Bereich der Bohrungsstufe 11 im Durchmesser verkleinert und mit einem Dichtring 10 versehen, so dass sich zwischen dem Ventilgehäuse 1 und der Bohrungsstufe 11 kein Leckagestrom zwischen dem horizontal in das Ventilgehäuse 1 einmündenden Druckmitteleinlass 13 und den unterhalb des Ventilgehäuses 1 angeordneten Druckmittelauslass 19 einstellen kann. Der im wesentlichen als Querkanal im Ventilträger 4 dargestellte Druckmitteleinlass 13 setzt sich über den im Hohlraum 20 des Ventilträgers 4 befindlichen Ringfilter 12 zur gestanzten Querbohrung 21 im Ventilgehäuse 1 fort, so dass einlassseitiges Druckmittel unmittelbar am zweiten Ventilschließkörper 8 ansteht, dessen in der Horizontalebene zur Querbohrung 21 angeordneten Querbohrungen 22 einen widerstandsarmen, umlenkungsfreien und damit einen direkten Strömungsweg zum ersten Ventilkörper 7 gewährleisten.

Das Elektromagnetventil zeichnet sich überdies dadurch aus, dass sich die Feder 17 außerhalb des den Druckmitteleinlass 13 mit dem Druckmittelauslass 19 verbindbaren Strömungswegs befindet, wozu entfernt vom Strömungsweg der Anschlag 3 im Ventilgehäuse 1 eingesetzt ist, an dem sich das vom zweiten Ventilschließkörper 8 abgewandte Ende der Feder 17 abstützt. Folglich ist die Feder 17 nicht mehr im Strömungsweg, sondern oberhalb der Querbohrungen 21, 22 am Anschlag 3 angeordnet. Der Anschlag 3 ist hierzu an einer Gehäusestufe 19 des Ventilgehäuses 1 befestigt. Diese Gehäusestufe 19 ist oberhalb der das Ventilgehäuse 1 durchdringenden Querbohrung 21 angeordnet. Der Anschlag 3 ist als im Topfboden weit geöffneter Hülsentopf ausgeführt, in dessen Öffnung der zweite Ventilschließkörper 8 in Richtung auf den Ventilsitzkörper 27 geführt und zentriert ist. Das eine Ende der Feder 17 stützt sich am Topfboden des Anschlags 3 ab. Der vom Topfboden abgewandte Topfrand ist nach der Innenwand des Ventilgehäuses 1 abgekröpft. Hierdurch ist zwischen dem Außenmantel des Hülsentopfs und der Innenwand des hülsenförmigen Ventilgehäuses 1 ein die Feder 17 aufnehmender Ringraum 25 gelegen, der über Druckausgleichsöffnungen 18, die im Ventilgehäuse 1 und am Umfang des Hülsentopfs angeordnet sind, zwischen dem Druckmitteleinlass 13 und einem Magnetankerraum 26 eine permanente Druckmittelverbindung herstellt. Der Anschlag 3 und die Ventilhülse 1 bestehen aus einem tiefgezogenen Dünnblech, in welche die Druckausgleichsöffnungen 18 eingestanzt oder eingeprägt sind. Hierdurch ergeben sich besonders kleine, kostengünstig und präzise herzustellende Ventilteile.

Das einteilige Ventilgehäuse 1 ist als abgestufte, dünnwandig gezogene Hülse ausgeführt, dessen vom zweiten Ventildurchlass 6 abgewandtes offenes Hülsenende von einem als Magnetkern wirksamen Stopfen 14 verschlossen ist, der als kostengünstig und präzise herzustellendes Kaltschlag- bzw. Fließpressteil ausgebildet ist. Der zweite Ventildurchlass 6 ist zur mechanischen Entlastung des Ventilgehäuses 1 in einem scheiben- oder hülsenförmigen Ventilsitzkörper 27 vorgesehen, der an der Innenwand des Ventilgehäuses 1 mittels Presssitz gehalten ist. Der Ventilsitzkörper 27 besteht aus einem verschleißfesten Metall. Er ist in seiner Bauhöhe derart gewählt, dass der zweite Ventilschließkörper 8 mit seinen diametralen Querbohrungen 21 auf der Höhe der diametralen Querbohrungen 22 des Ventilgehäuses 1 ruht, unabhängig davon, ob nun der Ventilschließkörper 8 in seiner abbildungsgemäßen Schließstellung den großen zweiten Ventildurchlass 6 verschließt oder davon abgehoben ist. Die beiden Querbohrungen 22 im Ventilgehäuse 1 sind deshalb im Durchmesser gegenüber den Durchlässen der im zweiten Ventilschließkörper 8 gelegenen Querbohrungen 21 wenigstens um den Hub des zweiten Ventilschließkörper 8 vergrößert, so dass auch in der hydraulisch initiierten Offenstellung des zweiten Ventilschließkörpers 8 zwecks einer möglichst umlenkungsfreien, widerstandsarmen Strömungsführung die Querbohrungen 21 immer mit den Querbohrungen 22 in Überdeckung sind.

Der zweite Ventilschließkörper 8 ist als Hülsentopf ausgeführt, dessen Topfboden den mit dem zweiten Ventilschließkörper 7 zusammenwirkenden ersten Ventildurchlass 5 aufnimmt. In der Nähe des Topfbodens ist die Mantelfläche des Hülsentopfs von den Querbohrungen 22 durchdrungen, die zur Bildung eines möglichst umlenkungsfreien Strömungswegs in der Horizontebene der Querbohrung 21 gelegen sind. Entgegengesetzt zum Topfboden ist am Hülsentopf ein in Richtung des hülsenförmigen Anschlags 3 abgekröpfter Rand vorgesehen, an dem sich das vom Anschlag 3 abgewandte zweite Ende der Feder 17 abstützt. Die Ausführung des Anschlags 3 als von der Innenwand des Ventilgehäuses 1 radial beabstandeter Hülsenabschnitt hat den Vorteil, dass die während des Einpreßvorgangs des Elektromagnetventils vom Haltekragen 2 auf die Ventilhülse 1 wirksamen Kräfte im Falle einer Deformation des Ventilgehäuses 1 vom Ringraum 25 aufgefangen werden und nicht auf den zweiten Ventilschließkörper 8 wirken. Eine Beschädigung und Klemmen des zweiten Ventilschließkörpers 8 wird somit auch bei relativ großen Toleranzabweichungen verhindert. Der Hülsentopf ist leicht , klein und kostengünstig und vorzugsweise durch Tiefziehen von Dünnblech hergestellt.

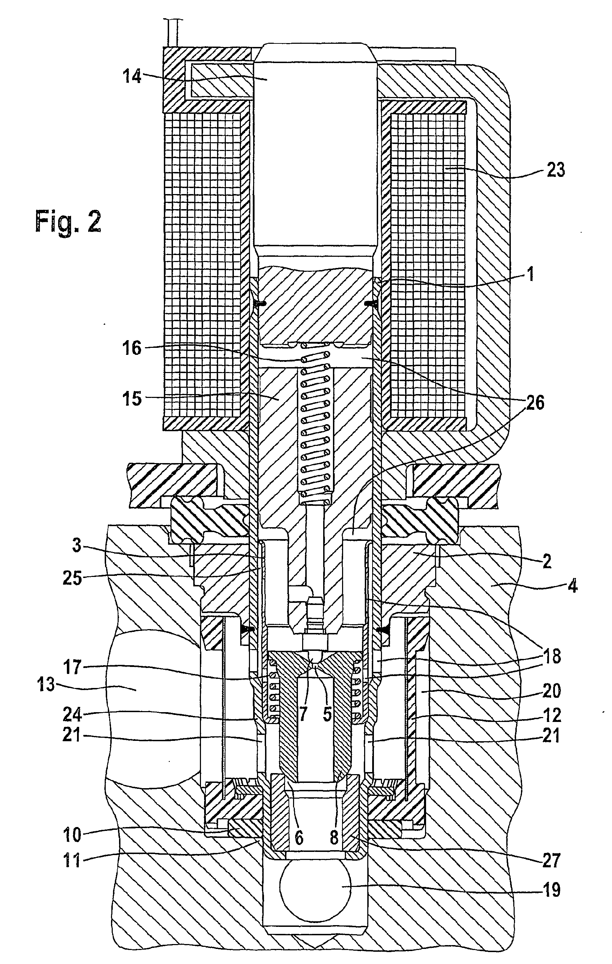

Abweichend von Figur 2 offenbart die Figur 2 eine weitere zweckmäßige Ausgestaltung einiger Einzelteile. Das Elektromagnetventil nach Figur 2 unterscheidet sich im Wesentlichen durch die Ausführung des zweiten Ventilschließkörpers 8 und des Ventilsitzkörpers 27 als massive Dreh- und/oder Kaltschlagteile vom Ventilaufbau nach Figur 1. Die Figur 2 zeigt den zweiten Ventilschließkörper 8 als schlankes, am unteren Ende konisch gedrehtes Kolbenteil, das aus Automatenstahl kostengünstig hergestellt ist. Dieses konische Ende liegt normalerweise am Kegeldichtsitz des hohlzylindrischen Ventilsitzkörpers 27 an, der bei Bedarf ebenso wie der Ventilschließkörper 8 im Dichtflächenbereich mit einer Oberflächenhärtung versehen werden kann. Auf eine Aufnahme des Stößelabschnitts innerhalb des zweiten Ventilschließkörpers 8 (vergl. Figur 1) wird in der Ausführung des Elektromagnetventils nach Figur 2 bewusst verzichtet, da hierfür eine unnötige Zerspanungsleistung zur Herstellung des Ventilschließkörpers 8 erforderlich wäre.

Auch wenn nicht im vorhergehenden Absatz alle in der Figur 2 gezeigten Merkmale explizit beschrieben wurden, entsprechen diese den zu Figur 1 erläuterten Merkmalen.

### Bezugszeichenliste

- 1: Ventilgehäuse
- 2: Haltekragen
- 3: Anschlag
- 4: Ventilträger
- 5,6: Ventildurchlässe
- 7: erster Ventilschließkörper
- 8: zweiter Ventilschließkörper
- 9: Gehäusestufe
- 10: Dichtring
- 11: Bohrungsstufe
- 12: Ringfilter
- 13: Druckmitteleinlass
- 14: Stopfen
- 15: Magnetanker
- 16: Druckfeder
- 17: Feder
- 18: Druckausgleichsöffnung
- 19: Druckmittelauslass
- 20: Hohlraum
- 21: Querbohrung
- 22: Querbohrung
- 23: Ventilspule
- 24: Gehäusestufe
- 25: Ringraum
- 26: Magnetankerraum
- 27: Ventilsitzkörper

## Patentansprüche

1. Elektromagnetventil, insbesondere für schlupfgeregelte Kraftfahrzeug-Bremsanlagen, mit einem in einem Ventilgehäuse (1) angeordneten ersten und einem zweiten Ventilschließkörper (7, 8), die in koaxialer Anordnung im Ventilgehäuse (1) einen ersten als auch einen zweiten Ventildurchlass (5, 6) zu öffnen oder zu verschließen vermögen, mit einem in das Ventilgehäuse (1) einmündenden Druckmitteleinlass (13) und einem Druckmittelauslass (19), wobei der erste Ventilschließkörper (7) abhängig von der elektromagnetischen Erregung einer Ventilspule (23) den im zweiten Ventilschließkörper (8) gelegenen ersten Ventildurchlass (5) zu öffnen oder zu verschließen vermag und wobei der zweite Ventilschließkörper (8) unter dem Einfluss einer außerhalb eines Strömungswegs angeordneten Feder (17) ausschließlich in der Offenstellung des ersten Ventildurchlasses (5) den zweiten Ventildurchlass (6) freigibt, so dass ein im Druckmitteleinlass (13) anstehendes Druckmittel entlang dem Strömungsweg innerhalb des Ventilgehäuses (1), in dem sich der erste als auch zweite Ventildurchlass (5, 6) befindet, zum Druckmittelauslass (19) gelangt, mit einem entfernt vom Strömungsweg im Ventilgehäuse (1) angeordneten Anschlag (3), an dem sich das vom zweiten Ventilschließkörper (8) abgewandte Ende der Feder (17) abstützt, wobei der Anschlag (3) oberhalb einer in das Ventilgehäuse (1) einmündenden Querbohrung (21) angeordnet ist, die mit dem Druckmitteleinlass (13) verbunden ist, **dadurch gekennzeichnet, dass** der Anschlag (3) an einer Gehäusestufe (24) des Ventilgehäuses (1) vorgesehen ist, die oberhalb der Querbohrung (21) gelegen und in ihrem Innendurchmesser an den Außendurchmesser des Anschlags (3) angepasst ist.

2. Elektromagnetventil nach Anspruch 1, **dadurch gekennzeichnet, dass** der Anschlag (3) als hülsenförmiger Topf ausgeführt ist, in dessen Inneren sich das eine Ende der Feder (17) an einem Topfboden abstützt, der mit seiner Außenfläche an einer oberhalb der Querbohrung (21) im Ventilgehäuse (1) gelegenen Gehäusestufe (24) positioniert ist.

3. Elektromagnetventil nach Anspruch 2, **dadurch gekennzeichnet, dass** der Anschlag (3) einen vom Topfboden abgewandten Topfrand aufweist, der radial nach außen abgekröpft ist und an der Innenwand des Ventilgehäuses (1) anliegt.

4. Elektromagnetventil nach Anspruch 2, **dadurch gekennzeichnet, dass** zwischen dem Außenmantel des hülsenförmigen Topfs und der Innenwand des hülsenförmigen Ventilgehäuses (1) ein Ringraum (25) vorgesehen ist, der über im Ventilgehäuse (1) und im hülsenförmigen Topf angeordnete Druckausgleichsöffnungen (18) zwischen dem Druckmitteleinlass (13) und einem Magnetankerraum (26) eine permanente Druckmittelverbindung herstellt.

5. Elektromagnetventil nach Anspruch 4, **dadurch gekennzeichnet, dass** sich innerhalb des Ringraums (25) die Feder (17) vertikal erstreckt.

6. Elektromagnetventil nach Anspruch 2, **dadurch gekennzeichnet, dass** das vom Topfboden abgewandte eine Ende der Feder (17) an einem Bund des kolbenförmigen zweiten Ventilschließkörpers (8) anliegt, der sich durch eine Öffnung im Topfboden auf einen Ventilsitzkörper (27) erstreckt, der unterhalb der Querbohrung (21) in das Ventilgehäuse (1) eingepresst ist.

7. Elektromagnetventil nach Anspruch 6, **dadurch gekennzeichnet, dass** der zweite Ventilschließkörper (8) als Drehteil aus Automatenstahl hergestellt ist.

8. Elektromagnetventil nach Anspruch 2, **dadurch gekennzeichnet, dass** der Anschlag (3) und die Ventilhülse (1) aus einem tiefgezogenen Dünnblech bestehen, und dass die Druckausgleichsöffnungen (18) und die Querbohrung (21) darin eingestanzt oder eingeprägt sind.

9. Elektromagnetventil nach Anspruch 1, **dadurch gekennzeichnet, dass** das Ventilgehäuse (1) einteilig ausgeführt ist, dessen vom zweiten Ventildurchlass (6) abgewandtes offenes Hülsenende von einem als Magnetkern wirksamen Stopfen (14) verschlossen ist, der als Kaltschlag- bzw. Fließpressteil ausgebildet ist.

10. Elektromagnetventil nach Anspruch 1, **dadurch gekennzeichnet, dass** der zweite Ventildurchlass (6) in einem scheiben- oder hülsenförmigen Ventilsitzkörper (27) vorgesehen ist, der entweder als automatengerechtes Drehteil oder Kaltschlagteil ausgeführt ist.

11. Elektromagnetventil nach Anspruch 1, **dadurch gekennzeichnet, dass** der zweite Ventilschließkörper (8) als im Tiefziehverfahren hergestellter Hülsentopf ausgeführt ist, dessen Topfboden den mit dem ersten Ventilschließkörper (7) zusammenwirkenden ersten Ventildurchlass (5) aufnimmt, und dass in der Nähe des Topfbodens die Mantelfläche des zweiten Ventilschließkörpers (8) von Querbohrungen (22) durchdrungen ist, die zur Bildung eines möglichst umlenkungsfreien Strömungswegs in der Horizontalebene einer mit dem Druckmitteleinlass (13) verbundenen Querbohrung (21) gelegen sind, welche das Ventilgehäuse (1) horizontal durchdringt.

## Claims

1. Solenoid valve, in particular for slip-controlled motor vehicle brake systems, having a first valve closing body (7), which is arranged in a valve housing (1), and a second valve closing body (8), the said valve closing bodies, in coaxial arrangement in the valve housing (1), being able to open and to close a first and a second valve passage (5, 6), having a pressure medium inlet (13), which issues into the valve housing (1), and a pressure medium outlet (19), with the first valve closing body (7) being able to open or to close the first valve passage (5), which is situated in the second valve closing body (8), as a function of the electromagnetic excitation of a valve coil (23), and with the second valve closing body (8) clearing the second valve passage (6) only in the open position of the first valve passage (5) under the influence of a spring (17) which is arranged outside a flow path, and therefore a pressure medium which is present in the pressure medium inlet (13) reaching the pressure medium outlet (19) along the flow path within the valve housing (1) in which the first and the second valve passage (5, 6) are located, having a stop (3), which is arranged in the valve housing (1) at a distance from the flow path, against which that end of the spring (17) which is averted from the second valve closing body (8) is supported, with the stop (3) being arranged above a transverse hole (21) which issues into the valve housing (1) and is connected to the pressure medium inlet (13), **characterized in that** the stop (3) is provided on a housing step (24) of the valve housing (1) which is situated above the transverse hole (21) and of which the inside diameter is matched to the outside diameter of the stop (3).

2. Solenoid valve according to Claim 1, **characterized in that** the stop (3) is designed as a sleeve-like pot in the interior of which one end of the spring (17) is supported against a pot base which is positioned, by way of its outer surface, against a housing step (24) which is situated above the transverse hole (21) in the valve housing (1).

3. Solenoid valve according to Claim 2, **characterized in that** the stop (3) has a pot edge which is averted from the pot base and is bent away radially outwards and rests against the inner wall of the valve housing (1).

4. Solenoid valve according to Claim 2, **characterized in that** an annular space (25) is provided between the outer casing of the sleeve-like pot and the inner wall of the sleeve-like valve housing (1), the said annular space establishing a permanent pressure medium connection between the pressure medium inlet (13) and a magnet armature space (26) via pressure compensation openings (18) which are arranged in the valve housing (1) and in the sleeve-like pot.

5. Solenoid valve according to Claim 4, **characterized in that** the spring (17) extends vertically within the annular space (25).

6. Solenoid valve according to Claim 2, **characterized in that that** end of the spring (17) which is averted from the pot base rests against a collar of the piston-like second valve closing body (8) which extends to a valve seat body (27) through an opening in the pot base, the said valve seat body being pressed into the valve housing (1) beneath the transverse hole (21).

7. Solenoid valve according to Claim 6, **characterized in that** the second valve closing body (8) is produced as a rotary part from machining steel.

8. Solenoid valve according to Claim 2, **characterized in that** the stop (3) and the valve sleeve (1) are composed of a deep-drawn thin metal sheet, and **in that** the pressure compensation openings (18) and the transverse hole (21) are punched or stamped in the said thin metal sheet.

9. Solenoid valve according to Claim 1, **characterized in that** the valve housing (1) is of integral design, the open sleeve end of the said valve housing, which sleeve end is averted from the second valve passage (6), is closed by a stopper (14) which acts as a magnet core and is in the form of a cold-formed or extruded part.

10. Solenoid valve according to Claim 1, **characterized in that** the second valve passage (6) is provided in a disc- or sleeve-like valve seat body (27) which is designed either as a machined rotary part or a cold-formed part.

11. Solenoid valve according to Claim 1, **characterized in that** the second valve closing body (8) is designed as a sleeve pot which is produced using the deep-drawing process and of which the pot base accommodates the first valve passage (5) which interacts with the first valve closing body (7), and **in that** transverse holes (22) pass through the casing surface of the second valve closing body (8) in the vicinity of the pot base, the said transverse holes being situated so as to form a flow path, which has as few deflections as possible, in the horizontal plane of a transverse hole (21) which is connected to the pressure medium inlet (13) and passes horizontally through the valve housing (1).

## Revendications

1. Soupape électromagnétique, notamment pour des installations de freinage de véhicules automobiles à régulation du glissement, comprenant un premier et un deuxième corps de fermeture de soupape (7, 8) disposés dans un boîtier de soupape (1), qui permettent d'ouvrir ou de fermer, dans un agencement coaxial dans le boîtier de soupape 1, un premier et un deuxième passage de soupape (5, 6), une entrée de fluide sous pression (13) débouchant dans le boîtier de soupape (1) et une sortie de fluide sous pression (19), le premier corps de fermeture de soupape (7), en fonction de l'excitation électromagnétique d'une bobine de soupape (23), permettant d'ouvrir ou de fermer le premier passage de soupape (5) situé dans le deuxième corps de fermeture de soupape (8) et le deuxième corps de fermeture de soupape (8), sous l'influence d'un ressort (17) disposé à l'extérieur d'un chemin d'écoulement, libérant, exclusivement dans la position d'ouverture du premier passage de soupape (5), le deuxième passage de soupape (6), de sorte qu'un fluide sous pression se présentant au niveau de l'entrée de fluide sous pression (13) parvienne jusqu'à la sortie de fluide sous pression (19), le long du chemin d'écoulement à l'intérieur du boîtier de soupape (1), dans lequel se trouvent le premier et le deuxième passage de soupape (5, 6), une butée (3) disposée à distance du chemin d'écoulement dans le boîtier de soupape (1), contre laquelle s'appuie l'extrémité du ressort (17) opposée au deuxième corps de fermeture de soupape (8), la butée (3) étant disposée au-dessus d'un alésage transversal (21) débouchant dans le boîtier de soupape (1), lequel est connecté à l'entrée de fluide sous pression (13), **caractérisée en ce que**, la butée (3) est prévue sur un étage de boîtier (24) du boîtier de soupape (1), qui est placé au-dessus de l'alésage transversal (21) et dont le diamètre intérieur est adapté au diamètre extérieur de la butée (3).

2. Soupape électromagnétique selon la revendication 1, **caractérisée en ce que**, la butée (3) est réalisée sous forme de pot en forme de douille à l'intérieur duquel l'une des extrémités du ressort (17) s'appuie contre un fond de pot, lequel est positionné avec sa surface extérieure sur un étage de boîtier (24) situé au-dessus de l'alésage transversal (21) dans le boîtier de soupape (1).

3. Soupape électromagnétique selon la revendication 2, **caractérisée en ce que**, la butée (3) présente un bord de pot opposé au fond de pot, lequel est recourbé radialement vers l'extérieur et s'applique contre la paroi intérieure du boîtier de soupape (1).

4. Soupape électromagnétique selon la revendication 2, **caractérisée en ce qu'**entre l'enveloppe extérieure du pot en forme de douille et la paroi intérieure du boîtier de soupape (1) en forme de douille, est prévu un espace annulaire (25), qui établit une connexion de fluide sous pression permanente entre l'entrée de fluide sous pression (13) et un espace d'armature magnétique (26) par le biais d'ouvertures de compensation de pression (18) disposées dans le corps de soupape (1) et dans le pot en forme de douille.

5. Soupape électromagnétique selon la revendication 4, **caractérisée en ce que**, le ressort (17) s'étend verticalement à l'intérieur de l'espace annulaire (25).

6. Soupape électromagnétique selon la revendication 2 **caractérisée en ce que**, l'une des extrémités du ressort (17) opposée au fond du pot s'applique contre un épaulement du deuxième corps de fermeture de soupape en forme de piston (8), qui s'étend à travers une ouverture dans le fond du pot sur un corps de siège de soupape (27), qui est pressé en-dessous de l'alésage transversal (21) dans le corps de soupape (1).

7. Soupape électromagnétique selon la revendication 6 **caractérisée en ce que**, le deuxième corps de fermeture de soupape (8) est réalisé sous forme de pièce tournante en acier de décolletage.

8. Soupape électromagnétique selon la revendication 2 **caractérisée en ce que**, la butée (3) et la douille de soupape (1) se composent d'une tôle mince emboutie, et **en ce que** les ouvertures de compensation de pression (18) et l'alésage transversal (21) sont estampés ou matricés dans ladite tôle.

9. Soupape électromagnétique selon la revendication 1 **caractérisée en ce que**, le boîtier de soupape (1) est réalisé d'une seule pièce, dont l'extrémité de douille ouverte opposée au deuxième passage de soupape (6) est fermée par un bouchon (14) servant de noyau magnétique, qui est réalisé sous forme de pièce emboutie à froid ou extrudée.

10. Soupape électromagnétique selon la revendication 1 **caractérisée en ce que**, le deuxième passage de soupape (6) est prévu dans un corps de siège de soupape (27) en forme de disque ou en forme de douille, qui est réalisé sous forme de pièce tournée par usinage automatique ou sous forme de pièce emboutie à froid.

11. Soupape électromagnétique selon la revendication 1 **caractérisée en ce que**, le deuxième corps de fermeture de soupape (8) est réalisé sous forme de pot de douille fabriqué par un procédé d'emboutissage profond, dont le fond de pot reçoit le premier passage de soupape (5) coopérant avec le premier corps de fermeture de soupape (7), et **en ce qu'**à proximité du fond de pot, la surface d'enveloppe du deuxième corps de fermeture de soupape (8) est traversée par des alésages transversaux (22) qui sont réalisés pour former une voie d'écoulement essentiellement sans déviation dans le plan horizontal d'un alésage transversal (21) connecté à l'entrée de fluide sous pression (13), lequel alésage transversal traverse horizontalement le boîtier de soupape (1).
